# EUROPÄISCHE PATENTANMELDUNG

(11) **EP 0 824 081 A2**
(43) Veröffentlichungstag der Anmeldung: **18.02.1998**
(21) Anmeldenummer: 97113534.8
(22) Anmeldetag: 06.08.1997
(51) Int. Cl.: B60N 2/48

(54) **Kopfstütze für Kraftfahrzeuge**

(30) Priorität: 12.08.1996 DE 29613917 U
(71) Anmelder: Philippine GmbH & Co. Technische Kunststoffe KG, 56112 Lahnstein (DE)
(72) Erfinder: Ruthmann, Hubert, D-56355 Hunzel (DE); Kämmer, Hartmut, D-53498 Bad Breisig (DE)
(74) Vertreter: Kossobutzki, Walter, Dipl.-Ing.(FH)

(57) **Zusammenfassung**

Die Erfindung bezieht sich auf eine Kopfstütze für Kraftfahrzeuge oder dergleichen, bestehend aus einem mit einer Außenhülle versehenen Polsterkörper aus geschäumten Kunststoff, wobei der Polsterkörper aus einem eine Befestigungseinlage aufnehmenden Kern aus Partikelschaum wie Polypropylen oder Polyethylen besteht, der zumindest im vorderen Bereich der Kopfstütze mit einer Zwischenschicht aus Polyurethanschaum versehen ist.

Um zu erreichen, daß eine feste und dauerhafte Verbindung zwischen dem Kern und der Zwischenschicht erreicht wird, ist die Zwischenschicht (4) durch einen Schäumvorgang hergestellt und mit dem Kern (2) verbunden.

## Beschreibung

Die Erfindung bezieht sich auf eine Kopfstütze für Kraftfahrzeuge oder dergleichen, bestehend aus einem mit einer Außenhülle versehenen Polsterkörper aus geschäumten Kunststoff, wobei der Polsterkörper aus einem eine Befestigungseinlage aufnehmenden Kern aus Partikelschaum wie Polypropylen oder Polyethylen besteht, der zumindest im vorderen Bereich der Kopfstütze mit einer Zwischenschicht aus Polyurethanschaum versehen ist.

Es sind Kopfstützen für Kraftfahrzeuge bekannt, die zunächst eine Befestigungseinlage besitzen, über die die Kopfstütze an der Rückenlehne des Fahrzeugsitzes befestigt werden kann. Diese Befestigungseinlage ist - mit Ausnahme des Befestigungsbereiches - von einem Polsterkörper aus elastisch eingestelltem Kunstharzschaum mit einer Außenhülle umgeben. Durch diesen elastischen Polsterkörper, der aus halbhartem Polyurethanschaum besteht, soll die Gefahr von Verletzungen weitgehend ausgeschlossen werden. Als nachteilig wird es bei einer solchen Kopfstütze angesehen, daß die Energievernichtung verhältnismäßig gering ist.

Es ist eine Kopfstütze bekannt geworden, die einen Kern aus Partikelschaum, beispielsweise Polypropylen oder Polyethylen, besitzt, der in seinem vorderen Bereich, dem Stützbereich für den Kopf, eine Zwischenschicht aus Polyurethanschaum aufweist. Diese Zwischenschicht wird aus einem sogenannten Schnittschaum ausgestanzt und mittels eines Klebers auf dem Kern aus Partikelschaum gesichert. Hierbei besteht jedoch die Gefahr, daß sich die Klebeverbindung zwischen der Zwischenschicht und dem Kern lösen kann, so daß die Zwischenschicht, die ebenfalls von der Außenhülle umschlossen ist, auf dem Kern schwimmt. Darüberhinaus hat eine solche Kopfstütze den Nachteil, daß sich der Schnittschaum nicht über die Ecken des Kernes erstreckt.

Der Erfindung liegt deshalb die Aufgabe zugrunde, eine Kopfstütze für Kraftfahrzeuges oder dergleichen so auszugestalten, daß eine feste und dauerhafte Verbindung zwischen dem Kern und der Zwischenschicht erreicht wird.

Zur Lösung dieser Aufgabe wird gemäß der Erfindung bei einer Kopfstütze der eingangs beschriebenen Gattung vorgeschlagen, daß die Zwischenschicht durch einen Schäumvorgang hergestellt und mit dem Kern verbunden ist.

Dadurch bedingt, daß die Zwischenschicht auf dem Kern durch einen Schäumvorgang hergestellt und dadurch mit demselben verbunden ist, wird eine besonders gute Verbindung zwischen dem Kern und der Zwischenschicht erreicht. Ein Ablösen der Zwischenschicht tritt nicht mehr auf. Diese Herstellung der Zwischenschicht ermöglicht es ferner, daß sich dieselbe auch über die Ecken des Kernes erstrecken kann und somit auch in diesen Bereichen eine ausreichende elastische Verformung der Kopfstütze sicherstellt. Bedarfsweise kann sich die Zwischenschicht annähernd über den gesamten Kern erstrecken, wobei lediglich im Befestigungsbereich für die Befestigungseinlage eine Ausnehmung vorhanden sein kann.

Die Erfindung wird nachfolgend anhand eines in einer Zeichnung in vereinfachter Weise dargestellten Ausführungsbeispieles näher erläutert.

In dieser Zeichnung ist eine Kopfstütze 1 für Kraftfahrzeuge in einer Seitenansicht gezeigt, die zunächst aus einem Kern 2 aus Partikelschaum, beispielsweise aus Polyethylen und/oder Polypropylen, besteht. In den Kern 2 ist eine nur angedeutete Befestigungseinlage 3 eingesetzt. Diese Befestigungseinlage 3 wird bei der Herstellung der Kopfstütze 1 von dem Partikelschaum umhüllt.

Der Kern 2 aus dem angegebenen Partikelschaum weist eine verhältnismäßig geringe Polstereigenschaft und damit eine niedrige Elastizität auf. Um diesen Nachteil zu vermeiden, ist der Kern 2 im dargestellten Ausführungsbeispiel annähernd vollständig von einer Zwischenschicht 4 aus Polyurethanschaum umschlossen. Lediglich im Bereich der Befestigungseinlage 3 ist ein Freiraum 5 vorhanden. Die Zwischenschicht 4 kann dabei allseits eine gleiche Dicke aufweisen. Es ist jedoch vorteilhaft, wenn die Dicke der Zwischenschicht 4 im sogenannten Stützbereich, daß ist der Bereich der Kopfstütze 1, auf den der Kopf auftreffen kann, geringsfügig dicker ausgebildet ist. Die Zwischenschicht 4 ist schließlich von einer Außenhülle 6 umschlossen.

Diese Ausgestaltung der Zwischenschicht 4 stellt sicher, daß sich diesselbe auch über die Ecken des Kernes 2 erstreckt, so daß die Kopfstütze 1 auch im diesem Bereich eine gute Elastizität aufweist.

In Abänderung des erläuterten Ausführungsbeispieles ist es möglich, die Zwischenschicht 4 hauptsächlich im Stützbereich der Kopfstütze 1 vorzusehen. Auch bei einer solchen Ausgestaltung der Zwischenschicht 4 sollte sich dieselbe auch über die Ecken des Kernes 2 erstrecken.

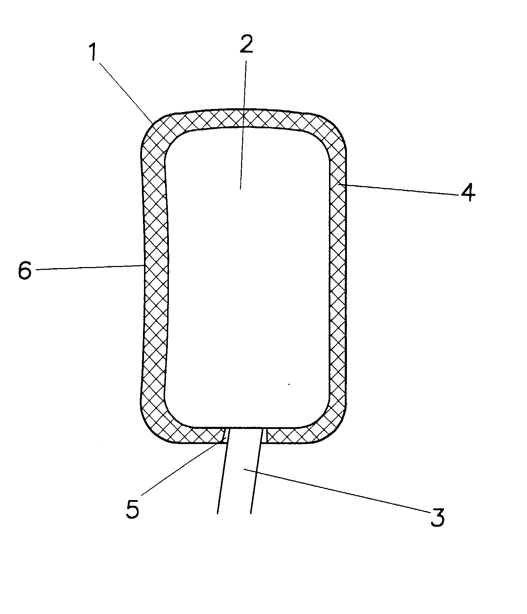

## Patentansprüche

1. Kopfstütze für Kraftfahrzeuge oder dergleichen, bestehend aus einem mit einer Außenhülle versehenen Polsterkörper aus geschäumten Kunststoff, wobei der Polsterkörper aus einem eine Befestigungseinlage aufnehmenden Kern aus Partikelschaum wie Polypropylen oder Polyethylen besteht, der zumindest im vorderen Bereich der Kopfstütze mit einer Zwischenschicht aus Polyurethanschaum versehen ist,
dadurch gekennzeichnet,
daß die Zwischenschicht (4) durch einen Schäumvorgang hergestellt und mit dem Kern (2) verbunden ist.

2. Kopfstütze nach Anspruch 1,
dadurch gekennzeichnet,
daß sich die Zwischenschicht (4) über die Ecken des Kernes (2) erstreckt.

3. Kopfstütze nach Anspruch 1,
dadurch gekennzeichnet,
daß die Zwischenschicht (4) den Kern (2) annähernd vollständig umschließt.
